# EUROPEAN PATENT SPECIFICATION

(11) **EP 1 508 976 B1**
(45) Date of publication and mention of the grant of the patent: **28.05.2008**
(21) Application number: 04012340.8
(22) Date of filing: 25.05.2004
(51) Int. Cl.: H04B 3/23

(54) **DSL modem apparatus and communication control method**
DSL-Modem und Verfahren zur Steuerung der Kommunikation
Modem DSL et méthode de contrôle de communication

(30) Priority: 22.08.2003 JP 2003299109
(43) Date of publication of application: 23.02.2005
(73) Proprietor: MATSUSHITA ELECTRIC INDUSTRIAL CO., LTD, Kadoma-shi, Osaka 571-8501 (JP)
(72) Inventor: Noma, Nobuhiko, Yokohama-shi Kanagawa 227-0033 (JP); Takagi, Genzo, Saitama 362-0047 (JP); Nagai, Motoyoshi, Yokohama-shi Kanagawa 247-0008 (JP); Araki, Mitsuhiro, Kiyose-shi Tokyo 204-0023 (JP); Atsuta, Akira, Tokyo 153-0064 (JP)
(74) Representative: Grünecker, Kinkeldey, Stockmair & Schwanhäusser Anwaltssozietät

(56) References cited:
- EP-A- 0 766 412
- US-A1- 2003 108 094

## Description

The present invention relates to a DSL modem apparatus and communication control method that can be applied to digital communication using a metallic cable.

xDSL modem using a currently available telephone line allows high-speed communication employing high frequency signals. An ADSL method, one type of xDSL realizing the high-speed communication, employs a DMT (discrete multi tone) modulation method using a plurality of carriers (sub-carriers) in a wide frequency band.

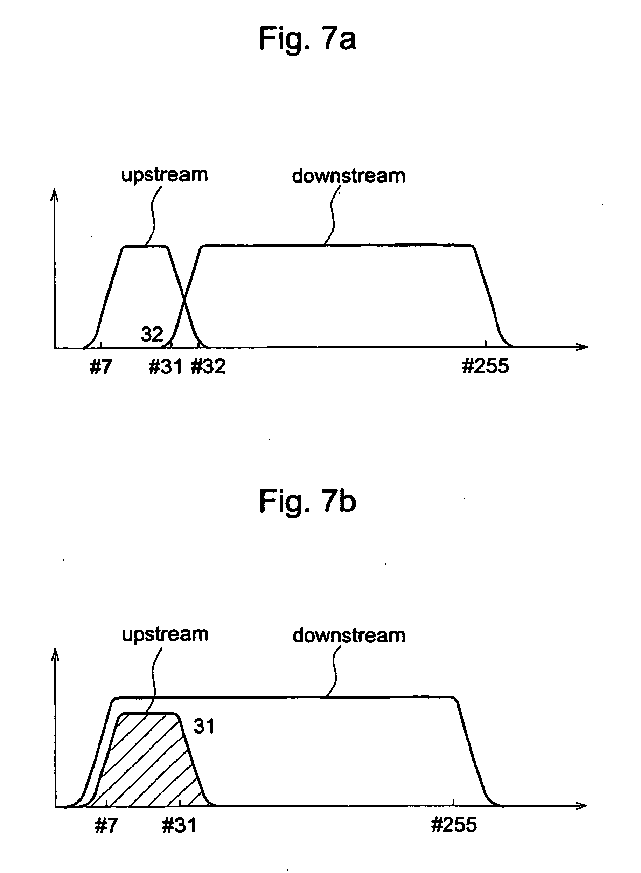

For example, 0.992.1 (G.dmt), which is one of the ADSL standards, divides the frequency band ranging from 25kHz to 1.1 MHz into 256 carriers (sub-carriers), Index number (#) is assigned to each sub-carrier, numbering from the low frequency carrier. As shown in Fig. 7 (a), sub-carriers #32 - #255 are generally used for a downstream, i.e., transmission from a center side (exchange side, ATU-C) to a remote side (user side, ATU-R). For upstream transmission from ATU-R to ATU-C, sub-carriers #7 - #31 are used. Further, in order to increase the speed of downstream communication, sub-carriers #7- #255 can be used in the downstream communication as shown in Fig. 7 (b).

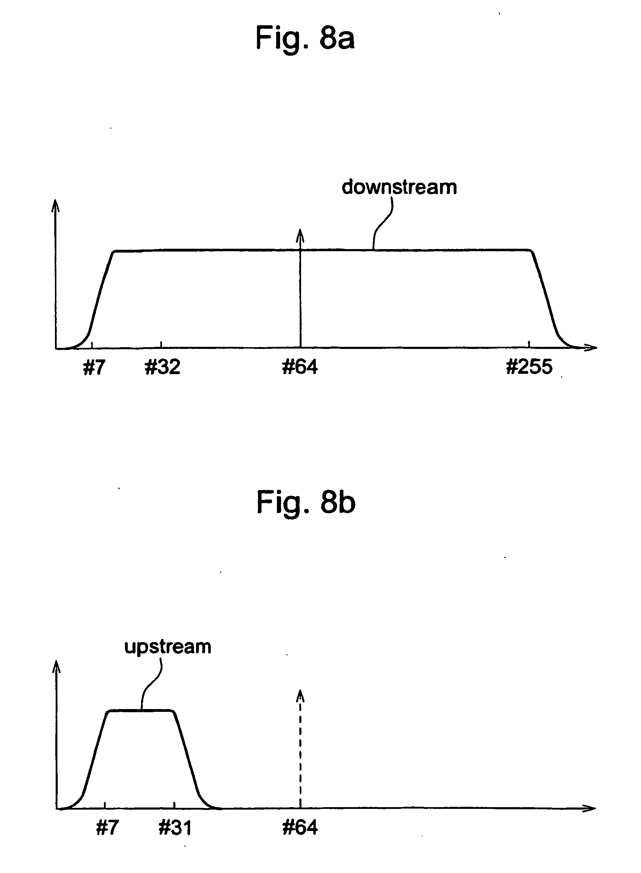

In the method shown in Fig. 7 (b), both ATU-C and ATU-R use sub-carriers #7-#31. ATU-R uses an echo canceller in order to prevent an echo from its own transmission signal. When an echo canceller is used, it is necessary to learn about the echo from its own apparatus in advance (e.g., Related Art 1). When ATU-C performs the echo canceller, AT-C transmits sub-carriers #7 - #255, as shown in Fig. 8 (a), in order to detect the echo of each sub-carrier #7 - #255. Transmission from ATU-R during such time would cause interference in sub-carriers #7 - #31, therefore, the transmission from ATU-R is stopped. On the other hand, when ATU-R performs the echo canceller learning, sub-carriers of #7 - #31 are transmitted as shown in Fig. 8 (b) in order to detect the echo of each sub-carrier #7 - #31. Transmission of ATU-C is stopped except for sub-carrier #64, which is used by ATU-C for the transmission of a PILOT signal. Since the ATU-R synchronizes with the ATU-C based on the PILOT signal transmitted by ATU-C, the PILOT signal transmission should not be stopped. However, the sub-carrier used for the PILOT signal transmission is #64, which is largely distant from the sub-carriers used by ATU-R, thereby the PILOT signal does not interfere with the echo canceller learning.

In an effort to improve the speed of the upstream, using the sub-carriers #7 - #255 similar to the downstream communication causes an interference with ATU-R learning the echo canceller. In particular, when ATEI-R learns the echo canceller, ATU-C needs to stop the transmission in the frequency band that interferes with the transmission signals of ATU-R. However, when the PILOT signal using sub-carrier#64 is stopped, ATU-R cannot synchronize with ATU-C. Thus, the PILOT signal cannot be stopped. Therefore, because of the interference from the PILOT signal, ATU-R cannot perform a full echo canceller learning, thereby creating an adverse effect to the succeeding data communication.

Accordingly, when an opposing apparatus transmits signals that can interfere with transmission signals from its own apparatus (not limited to PILOT signal of #64), during an echo canceller learning period at ATU-R or ATU-C, it becomes difficult to perform the complete echo canceller learning, thereby creating an adverse effect to the succeeding data communication.

US 2003/108 094 A1 describes a modem with enhanced echo canceller achieving computationally efficient echo cancellation. The apparatus includes a cyclic echo synthesizer sub-canceller and a frequency domain echo canceller. The cyclic echo synthesizer sub-canceller makes the receive echo signal appear periodic, so that the frequency domain canceller can then cancel transmit signal echoes in the received signal.

EP-A-0 766 412 describes an echo canceller using initial training allowing to reduce the residual echo signal, caused by the distortion of the far-and echo signal during training.

The present invention addresses the above-described problems. The purpose of the invention is to provide a DSL modem apparatus and a communication control method that allows a highly accurate echo canceller learning, even when the upstream frequency band used by ATU-R includes PILOT signals transmitted by ATU-C, and enables the upstream communication to utilize the wide range of frequency band, similar to the downstream.

This object is achieved by the subject matters of the independent claims.

Preferred embodiments are subject matter of the dependent claims.

This invention controls the data transmission to be stopped for carrier-indexes for a specific signal, the signal being transmitted by the opposing communication apparatus. Further, a notch unit is provided at a frequency location of the specific signal so that the transmission signal from its own apparatus is cut at the frequency location of the specific signal and at the reception side.

The present invention is further described in the detailed description which follows, with reference to the noted plurality of drawings by way of non-limiting examples of exemplary embodiments of the present invention, in which like reference numerals represent similar parts throughout the several views of the drawings, and wherein:
Fig. 1 is a schematic diagram of a communication system according to an embodiment of the present invention;
Fig. 2 is a functional block diagram of a transceiver shown in Fig. 1;
Fig. 3 is a functional block diagram of an AFE portion shown in Fig. 1;
Fig. 4 illustrates a spectrum of an upstream;
Fig. 5 is a sequence chart illustrating the handshake sequence and the first half of the initialization sequence;
Fig. 6 illustrates a spectrum of a downstream;
Fig. 7 (a) illustrates carrier indexes used in the upstream and downstream according to G.dmt;
Fig. 7 (b) illustrates a state where carrier indexes used for the upstream overlap with the low frequency side of carrier indexes used for the downstream;
Fig_ 8 (a) illustrates a training signal during an echo canceller learning at a center side;
Fig. 8 (b) illustrates a training signal during an echo canceller learning at a remote side; and

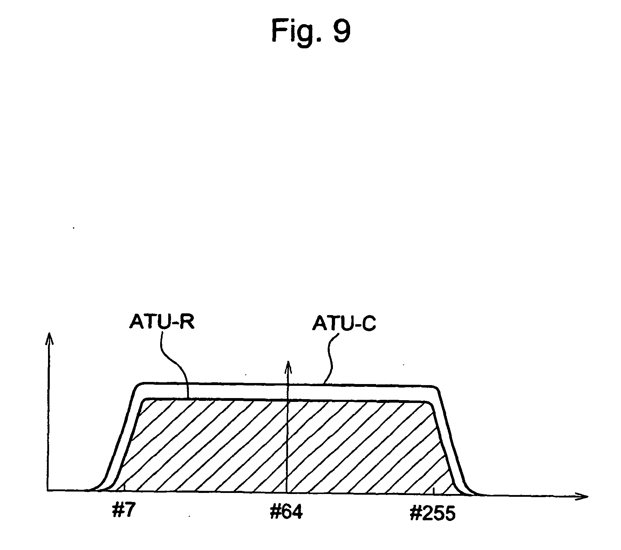

Fig. 9 illustrates a state where exactly the same carrier indexes are shared by the upstream and downstream.

The embodiments of the present invention are explained in the following, in reference to the above-described drawings.

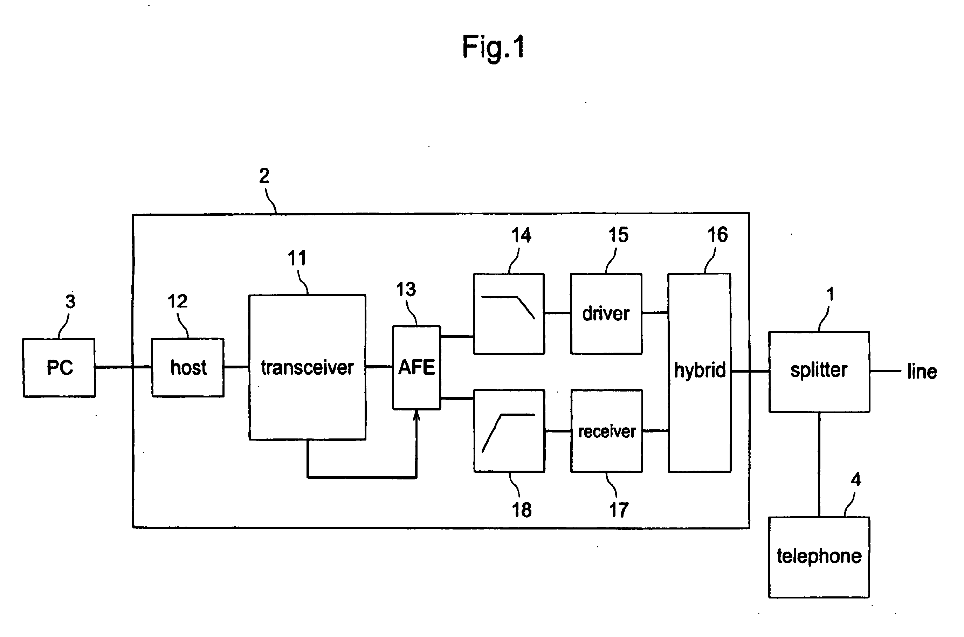

Fig. 1 illustrates a schematic configuration of a communication system of an ATU-R side, according to the present invention. In the communication system as illustrated in Fig. 1, a public phone line or a similar phone line (hereafter referred to as line) is connected to ADSL modem apparatus 2 via splitter 1. Further, user terminal 3 is connected to ADSL modem apparatus 2. When user terminal 3 and telephone 4 share one line, splitter 1 is necessary. However, when telephone 4 is not used, splitter 1 is not needed. It is also possible to have a configuration where user terminal 3 internally installs ADSL modem apparatus 2.

ADSL modem apparatus 2 includes transceiver 11 that executes ADSL communication, and host 12 that controls the entire operation including the one of transceiver 11. At the line side of transceiver 11, units are configured with an analog circuit via analog front end (hereafter referred to as AFE) 13. Driver 15 is connected to a DA converter 13-1 of AFE 13 via analog notch filter 14, so that an analog signal amplified by driver 15 is transmitted to the line via hybrid 16. The analog signal transmitted from the line is received by receiver 17 via hybrid 16, and then input into an AD converter of AFE 13 via analog filter 18. When sampling data is output from the AD converter, AFE 13 outputs the data to transceiver 11.

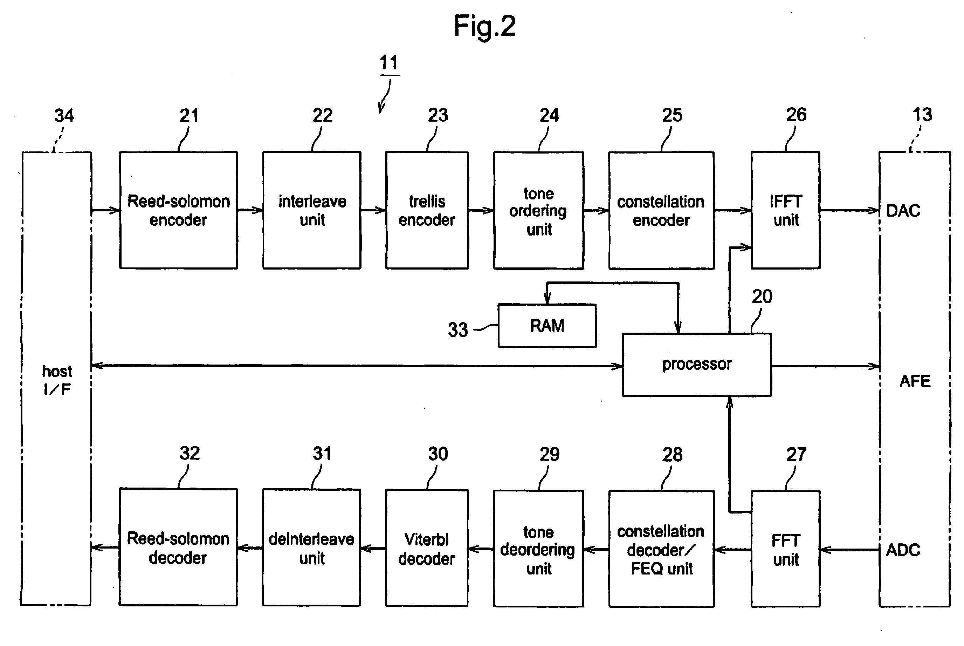

Fig. 2 is a functional block diagram illustrating transceiver 11. Processor 20 has functions to execute handshake and initialization sequences and to control communication during data transmission (SHOWTIME).

The transmission side of transceiver 11 includes Reed-Solomon encoder 21 that adds a redundancy bit for checking error, interleave unit 22 that sorts data to enable a burst error correction during Reed-Solomon decoding, trellis encoder 23 that performs data convolution from a trellis encoding, tone ordering unit 24 that lays out a bit number for each carrier, constellation encoder 25 that allocates topology of the transmission data on constellation coordinates, and IFFT unit 26 that performs an Inverse Fast Fourier Transform (hereafter referred to as IFFT) on data after the constellation encoding process.

The reception process side of transceiver 11 includes FFT unit 27 that performs a Fast Fourier Transform (hereafter referred to as FFT) on sampling data of the received signal, constellation decoder/FEQ unit 28 that decodes data from constellation data of the FFT output signal and corrects a topology on the constellation coordinates, tone de-ordering unit 29 that restores data assigned to each carrier after tone ordering process at the transmission side, Viterbi decoder 30 that performs Viterbi decoding on the received data, de-interleave unit 31 that restores data being resorted by the transmission side, and Reed-Solomon decoder 32 that deletes the redundancy bit added by the transmission side. RAM 33 is a work area of processor 20, which will be used for executing handshake and initialization sequences. Transceiver 11 is connected to host 12 via host interface (I/F) 34.

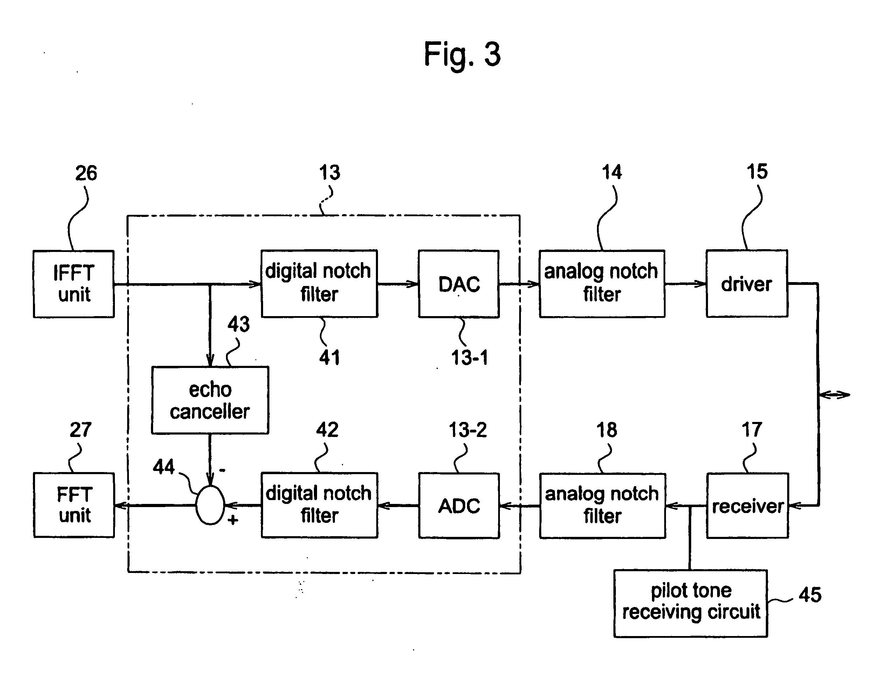

Hereafter, the configuration of AFE 13 is illustrated in detail. Fig. 3 is a block diagram illustrating the internal structure of AFE 13. AFE 13 is provided with an echo canceller function and a digital filter function. Digital notch filter 41 is connected to the input section of DAC 13-1. Digital notch filter 41 has a function to remove signal energy of sub-carrier #64 area that is used by ATU-C for a PILOT signal. In other words, ATU-R transmits signals using sub-carrier in a wide frequency band (e.g., #7 - #255) while no energy is applied to sub-carrier #64 (frequency location of the PILOT signal). At the frequency location of #64, transmission data having no signal energy is converted into an analog signal. Further, analog notch filter 14 removes signal energy at the frequency location of sub-carrier #64. This signal energy is affected by signals from the adjacent sub-carriers #63 and #65. In particular, signal energy at each frequency location is diffused into adjacent frequency locations due to the skirt shape of its energy. Therefore, the signal energy at the frequency location of sub-carrier #64 is also affected by signal energy diffused from adjacent frequency locations. However, because of the process at analog notch filter 14, it is possible to remove energy diffused into the frequency location of sub-carrier #64, the energy being generated by adjacent frequency locations.

Furthermore, analog notch filter 18 (located at the output section of receiver 17) and digital notch filter 42 (located at the output section of ADC 13-2) are set in the predetermined frequency band. In addition, a notch unit includes digital notch filter 41, analog notch filter 14, analog notch filter 18, and digital notch filter 42.

The transmission signal output from IFFT unit 26 is diverged and captured by echo canceller 43. In addition, the transmission signal from ATU-C (via receiver 17, analog notch filter 18, and ADC 13-2) and echo component of its own transmission signal (ATU-R) (via IFFT unit 26, digital notch filter 41, DAC 13-1, analog notch filter 14, driver 15, receiver 17, analog notch filter 18, and ADC 13-2) are combined as a reception signal, which is output from digital notch filter 42 at the reception side. The input section of FFT unit 27 is provided with subtracter 44, where the transmission signal of echo canceller 43 is subtracted from the output signal of digital notch filter 42. The result of the subtraction is input to FFT unit 27, as a reception signal.

An ADSL modem apparatus of the center side is connected to ADSL modem apparatus 2 via a metallic cable. The ADSL modem apparatus of the center side has the same configuration as ADSL modem apparatus 2. When the center side is an exchange provided by a communication industry, telephone 4 does not exist.

The following description illustrates in detail the operation according to the present embodiment. When processor 20 is in the initialization sequence, echo canceller 43 performs an echo canceller learning in order to remove the echo signal.

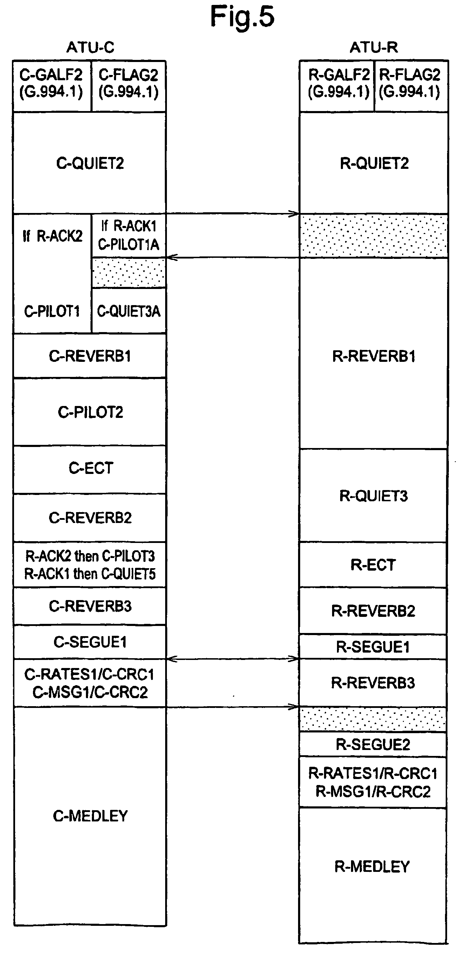

When ATU-R is turned on, the process illustrated in Fig. 5 is performed. First, ATU-C and ATU-R perform the handshake sequence based on G.944.1 and select a mode. Using the example shown in Fig. 5, G.dmt is selected as a mode for the initialization sequence.

When the initialization sequence is initiated, ATU-C transmits C-PILOT1 or C-PILOT1A signal using indexes #64 and #48.

When the initialization sequence is initiated, and when ATU-R detects signal energy at indexes #64 and #48, ATU-R starts a hyperframe synchronization process based on the PILOT signal. After establishing the hyperframe, ATU-R transmits a R-REVERB1 signal.

Upon detecting the R-REVERB1 signal, ATU-C transmits a C-REVERB1 signal to the remote side.

Upon detecting the R-REVERB1 signal, ATU-C sequentially transmits C-REVERB1, C-PILOT2, C-ECT, and C-REVERB2 for a predetermined number of symbols.

Based on the C-REVERB1 or C-REVERB2, ATU-R performs the symbol synchronization.

Upon transmitting C-REVERB3, ATU-C transmits C-SEGUE1, while, upon transmitting R-REVERB2, ATU-R transmits R-SEGUE1 for a plurality of symbols. Thereafter, cyclic prefix data is added to each symbol, since important signals are exchanged that determine parameters during the SHOWTIME. Thus, a RATES signal and an MSG signal with cyclic prefix data are transmitted in order to determine various communication parameters by exchanging communication speed, encoding parameter, and tone-ordering information. Although the following sequence is omitted, both sides confirm the determination of the communication parameters and perform data communication (SHOWTIME).

Further, at the same timing of R-ECT, ATU-R performs the echo canceller learning. As shown in Fig. 5, when ATU-R is in the period of R-ECT, ATU-C stops the transmission of C-REVERB2 signal and transmits C-PILOT3 using sub-carrier #64.

During the R-ECT period, ATU-R performs the echo canceller learning (by echo canceller 43) for the all sub-carriers used during the SHOWTIME. In this embodiment, the upstream uses the same sub-carriers #7 - #255 as the downstream. Therefore, processor 20 generates a training signal (transmission data) carried by sub-carriers #7 - #255, and inputs the training signal into IFFT unit 26. However, transmission data to be carried by sub-carrier #64 (frequency location of the PILOT signal) is not generated.

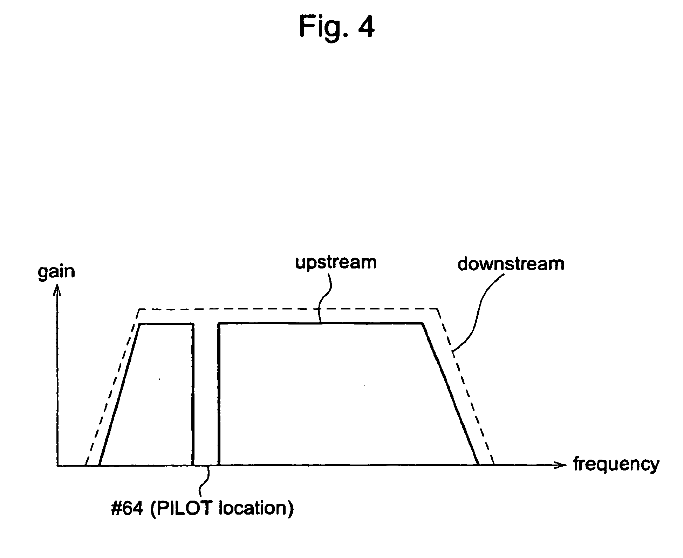

IFFT unit 26 outputs a digital modulation signal (training signal) to digital notch filter 41. The signal is modulated so that transmission data is loaded to each sub-carrier #7- #255 (excluding #64). Since digital notch filter 41 has the filter characteristics as described earlier, signal energy components at the frequency location of #64 are removed from the input signal. Accordingly, a training signal, where the signal energy components at the frequency location of #64 are removed, is generated for #7 - #255 (excluding #64). When the training signal is converted into an analog signal by DAC 13-1, analog notch filter 14 filters the signal into a waveform. Especially, due to the frequency characteristics of analog notch filter 14, the signal energy at the frequency location of #64 is removed. Therefore, the training signal having a carrier hole at the frequency location of #64 as shown in Fig. 4. The training signal being configured with sub-carriers #7 - #255 and having a carrier hole at frequency location #64 is transmitted to the line via driver 15.

Receiver 17 receives an echo signal of the training signal. The echo signal is given a waveform by analog notch filter 18, and is converted into a digital echo signal at ADC 13-2. The digital echo signal is input to subtracter 44 via digital notch filter 42.

Subtracter 44 is also provided with transmission data (training signal) of #7 - #255, the data being transmitted from its own apparatus via echo canceller 43. The difference between the transmission data of its own apparatus and the echo signal is detected, in order to find a most suitable coefficient that can convert transmission data into the echo signal. The above process is referred to as an echo canceller learning.

Receiver 17 cannot find a most suitable coefficient when the transmission signal from the ATU-C interferes with the echo signal originated from its own transmission signal (training signal). Therefore, ATU-C does not transmit signals other than PILOT signals, which is minimally required. The transmission signal from ATU-R has a carrier hole in the frequency location of the PILOT signal (#64), thereby preventing the interference of the PILOT signal with the echo signal. As a result, the echo signal configured with frequencies excluding the frequency of #64 is configured purely with the echo signal of its own transmission signal.

As described above, a most suitable coefficient for converting the transmission data into an echo signal is found, from an echo signal that does not have any interference of the PILOT signal. Then, the coeffcient is set in echo canceller 43. Although the transmission data of #64 is subtracted from the PILOT signal, the transmission data at the frequency location #64 has no data. Therefore, the PILOT signal is directly provided to processor 20 via pilot tone receiving circuit 45, and is used by processor 20 for its synchronization.

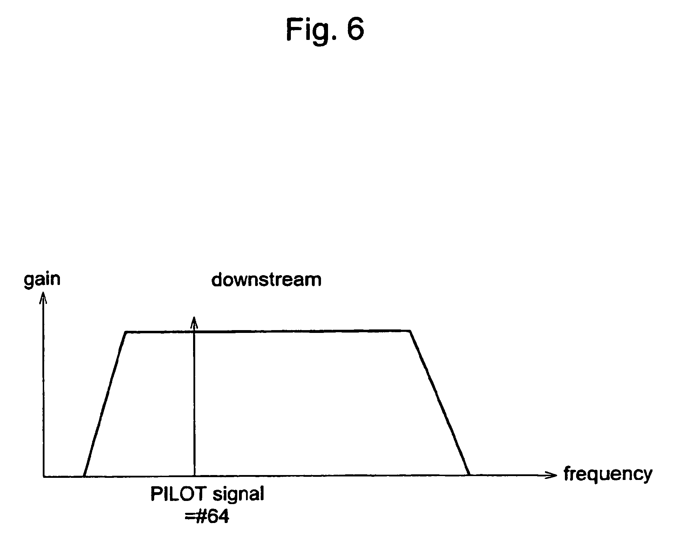

In addition, ATU-C side performs a training of echo canceller 43 during the C-ECT period. As shown in Fig. 5, ATU-R stops the transmission of R-REVERB 1 signal during the C-ECT period and has a silence (R-QUIET3). Therefore, as shown in Fig. 6, ATU-C can detect the echo signal without the interference with the remote side signal, even though ATU-C transmits the training signal throughout the transmission band (#7 - #255). Similar to the remote side, a most suitable coefficient is calculated from the difference between the echo signal and the transmission signal.

After completing the echo canceller learning, the upstream communication (transmission from ATU-R to ATU-C) is performed in a multi-carrier method, using carriers of carrier indexes #7 - #255 and having a carrier hole at the location of the PILOT signal, as shown in Fig. 4. Further, the downstream communication (transmission from ATU-C to ATU-R) is performed using all carriers of #7 - #255 as shown in Fig. 6. However, #64 (in the downstream communication) is used for the PILOT signal.

During the initialization sequence and the SHOWTIME, sub-carrier #64 always has no transmission data from the ATU-R (upstream), so that there is a carrier hole in the frequency location of #64. On the other hand, ATU-C transmits the PILOT signal using sub-carrier #64, and transmits the transmission data using other sub-carriers. Accordingly, the echo canceller learning can be accurately performed using the entire frequency band. In addition, the upstream communication can be performed after the echo canceller learning, using the same carrier indexes (except #64) as the downstream, thereby improving the upstream speed.

In the above illustration, a notch filter is provided at the frequency location of the PILOT signal, the signal being transmitted from the center side. However, when there are other specific signals that should not be stopped during the remote side echo canceller learning, a notch filter can be provided at the frequency location of the specific signal in order to perform the echo canceller learning without the echo interference of the specific signal

In addition, the illustrations were provided for the remote side echo canceller learning. However, when there are other specific signals, transmission of which should not be stopped from the remote side, a notch filter can be provided at the frequency location of the specific signal (similar to the above) in order to perform the echo canceller learning without the echo interference of the specific signal.

Further, although the above illustration used an ADSL modem for the example, the present invention can be applied to other xDSL modems.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration; rather than words of limitation. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above-described embodiments, and various variations and modifications may be possible without departing from the scope of the present invention.

## Claims

1. A DSL modem apparatus (2) connected to another DSL modem apparatus via a line, the DSL modem apparatus (2) being adapted to transit to the other DSL modem apparatus, signals on carriers in a frequency band, comprising:
receiving means (17) for receiving a first signal from the tine during an initialization sequence;
first filtering means (18, 42), on a reception path, for notching out one of the carriers in the frequency band from the signal received by the receiving means (17);
echo canceling means (43) for setting coefficients for calculating an estimation of the first signal filtered by the first filtering means (18,42) from a second signal, which is on the carriers in the frequency band in a transmission path,
**characterized by**
second filtering means (41.14), on the transmission path, for notching out the one of the carriers in the frequency band from the second signal; and
transmitting means (15) for transmitting the second signal filtered by the second filtering means (41,14) to the other DSL modem apparatus.

2. The DSL modem apparatus (2) according to claim 1, **characterized in that** the second filtering means (41,14) is adapted to filter out the one of the carriers in the frequency band from a third signal, in the transmission path, on the carriers in the frequency band during a data communication;
the transmitting means (15) is adapted to transmit the third signal filtered by the second filtering means (41;14) to the other DSL modem apparatus;
the receding means (17) is adapted to receive a fourth signal from the line during the data communication;
the first filtering means (18, 42) being adapted to filter out the one of the carriers in the frequency band from the fourth signal received by the receiving means (17), and
the echo canceling means (43) being adapted to calculate using the set coefficients, an echo signal of the third signal;
wherein said DSL modem apparatus (2) further comprises subtracting means (44) for subtracting the echo signal calculated by the echo canceling means (43), from the fourth signal filtered by the first filtering means (18,42).

3. the DSL modem apparatus (2) according to one of claims 1 or 2, **characterized in that** a PILOT the other DSL modem apparatus transmits to the DSL modem apparatus (2) during the initialization sequence is the one of the carriers in the frequency band.

4. A communication control method to be performed by a DSL modem apparatus (2) connected to another DSL modem apparatus via a line, the DSL modem apparatus (2) transmitting, to the other DSL modem apparatus, signals on carriers in a frequency band, comprising:
receiving a first signal from the line during an initialization sequence;
notching out one of the carriers in the frequency band from the first signal received on a reception path;
setting coefficients for calculating an estimation of the first signal filtered from a second signal, which is on the carriers in the frequency band in a transmission path,
**characterized by**
filtering out the one of the carriers in the frequency band from the second signal; and
transmitting the second signal filtered to the other DSL modem apparatus.

5. The communication control method according to claim 4 **characterized by** further comprising:
filtering out the one of the carriers in the frequency band from a third signal, in a transmission path, on the carriers in the frequency band during a data communication;
transmitting the third signal filtered to the other DSL modem apparatus;
receiving a fourth signal from the line during the data communication;
filtering out the one of the carriers in the frequency band from the fourth signal received;
canceling, using the set coefficients, an echo signal of the third signal; and
subtracting the calculated echo signal from the filtered fourth signal.

6. The communication control method according to one of claims 4 or 5, **characterized in that** a PILOT signal the other DSL modem apparatus transmits to the DSL modem apparatus (2) during the initialization is the one of the carriers in the frequency band.

## Patentansprüche

1. DSL-Modem-Vorrichtung (2), die mit einer anderen DSL-Modem-Vorrichtung über eine Leitung verbunden ist, wobei die DSL-Modem-Vorrichtung (2) angepasst ist, der anderen DSL-Modem-Vorrichtung Signale über Träger in einer Frequenzspanne zu senden, wobei die DSL-Modem-Vorrichtung umfasst:
ein Empfangsmittel (17) zum Empfangen eines ersten Signals über die Leitung während einer Initialisierungssequenz;
ein erstes Filterungsmittel (18, 42), auf einem Empfangsweg, zum Herausfiltern eines der Träger in der Frequenzspanne aus dem ersten Signal, das vom Empfangsmittel (17) empfangen wird;
ein Echo-Unterdrückungsmittel (43) zum Setzen von Koeffizienten zur Berechung einer Einschätzung des vom ersten Filterungsmittel (18, 42) gefilterten ersten Signals aus einem zweiten Signal, das auf den Trägern in der Frequenzspanne in einem Sendeweg ist,
**gekennzeichnet durch**
ein zweites Filterungsmittel (41, 14), auf dem Sendeweg, zum Herausfiltern desjenigen der Träger in der Frequenzspanne aus dem zweiten Signal; und
ein Sendemittel (15) zum Senden des vom zweiten Filterungsmittel (41, 14) gefilterten zweiten Signals zur anderen DSL-Modem-Vorrichtung.

2. DSL-Modem-Vorrichtung (2) gemäß Anspruch 2, **dadurch gekennzeichnet, dass** das zweite Filterungsmittel (41, 14) angepasst ist, denjenigen der Träger in der Frequenzspanne aus einem dritten Signal, im Sendeweg, auf den Trägern in der Frequenzspanne während einer Datenkommunikation herauszufiltern;
das Sendemittel (15) angepasst ist, das vom zweiten Filterungsmittel (41, 14) gefilterte dritte Signal zur anderen DSL-Modem-Vorrichtung zu senden;
das Empfangsmittel (17) angepasst ist, ein viertes Signal aus der Leitung während der Datenkommunikation zu empfangen;
das erste Filterungsmittel (18, 42) angepasst ist, denjenigen Träger in der Frequenzspanne aus dem vom Empfangsmittel (17) empfangenen vierten Signal herauszufiltern; und
das Echo-Unterdrückungsmittel (43) angepasst ist, ein Echosignal des dritten Signals mittels der gesetzten Koeffizienten zu berechnen;
wobei die DSL-Modem-Vorrichtung (2) weiterhin ein Subtrahierungsmittel (44) zum Subtrahieren des vom Echo-Unterdrückungsmittel (43) berechneten Echosignals von dem vom ersten Filterungsmittel (18, 42) gefilterten vierten Signal.

3. DSL-Modem-Vorrichtung (2) gemäß einem der Ansprüche 1 oder 2, **dadurch gekennzeichnet, dass** ein PILOT-Signal, das die andere DSL-Modem-Vorrichtung der DSL-Modem-Vorrichtung (2) während der Initialisierungssequenz sendet, derjenige der Träger in der Frequenzspanne ist.

4. Verfahren zur Kommunikationssteuerung, das von einer DSL-Modem-Vorrichtung (2) auszuführen ist, die über eine Leitung mit einer anderen DSL-Modem-Vorrichtung verbunden ist, wobei die DSL-Modem-Vorrichtung (2) der anderen DSL-Modem-Vorrichtung Signale über Träger in einer Frequenzspanne sendet, wobei das Verfahren folgende Schritte umfasst:
Empfangen eines ersten Signals über die Leitung während einer Initialisierungssequenz;
Herausfiltern eines der Träger in der Frequenzspanne aus dem ersten Signal, das auf einem Empfangsweg empfangen wird;
Setzen von Koeffizienten zum Berechnen einer Einschätzung des ersten Signals, das aus einem zweiten Signal gefiltert wird, wobei das zweite Signal auf den Trägern in der Frequenzspanne auf einem Sendeweg ist,
**gekennzeichnet durch**
Herausfiltern desjenigen der Träger in der Frequenzspanne aus dem zweiten Signal; und
Senden des gefilterten zweiten Signals zur anderen DSL-Modem-Vorrichtung.

5. Verfahren zur Kommunikationssteuerung gemäß Anspruch 4, **dadurch gekennzeichnet, dass** das Verfahren weiterhin die folgenden Schritte umfasst:
Herausfiltern desjenigen der Träger in der Frequenzspanne aus einem dritten Signal, auf einem Sendeweg, auf den Trägern in der Frequenzspanne während einer Datenkommunikation;
Senden des gefilterten dritten Signals zur anderen DSL-Modem-Vorrichtung;
Empfangen eines vierten Signals über die Leitung während der Datenkommunikation;
Herausfiltern desjenigen der Träger in der Frequenzspanne aus dem empfangenen vierten Signal;
Unterdrücken eines Echosignals des dritten Signals mittels der gesetzten Koeffizienten; und
Subtrahieren des berechneten Echosignals vom gefilterten vierten Signal.

6. Verfahren zur Kommunikationssteuerung gemäß einem der Ansprüche 4 oder 5, **dadurch gekennzeichnet, dass** ein PILOT-Signal, das die andere DSL-Modem-Vorrichtung der DSL-Modem-Vorrichtung (2) während der Initialisierung sendet, derjenige der Träger in der Frequenzspanne ist.

## Revendications

1. Dispositif (2) de modem DSL relié à un autre dispositif de modem DSL par une ligne, le dispositif de modem DSL étant adapté pour émettre vers l'autre dispositif de modem DSL des signaux sur des porteuses dans une bande de fréquences, le dispositif (2) de modem DSL comprenant :
un moyen de réception (17) pour recevoir un premier signal en provenance de la ligne pendant une séquence d'initialisation ;
un premier moyen de filtrage (18, 42), sur une voie de réception, pour enlever une des porteuses dans la bande de fréquences du premier signal reçu par le moyen de réception (17) ;
un moyen d'annulation d'écho (43) pour établir des coefficients pour calculer une estimation du premier signal filtré par le premier moyen de filtrage (18, 42) à partir d'un deuxième signal qui est sur les porteuses dans la bande de fréquences dans une voie de transmission,
**caractérisé par**
un deuxième moyen de filtrage (41, 14), sur la voie de transmission, pour enlever celle d'entre les porteuses dans la bande de fréquences du deuxième signal ; et
un moyen d'émission (15) pour émettre le deuxième signal filtré par le deuxième moyen de filtrage (41, 14) vers l'autre dispositif de modem DSL.

2. Dispositif (2) de modem DSL selon la revendication 1, **caractérisé en ce que** le deuxième moyen de filtrage (41, 14) est adapté pour filtrer celle d'entre les porteuses dans la bande de fréquences d'un troisième signal, dans la voie de transmission, sur les porteuses dans la bande de fréquences pendant une communication de données ;
le moyen d'émission (15) est adapté pour émettre le troisième signal filtré par le deuxième moyen de filtrage (41, 14) vers l'autre dispositif de modem DSL ;
le moyen de réception (17) est adapté pour recevoir un quatrième signal en provenance de la ligne pendant la communication de données ;
le premier moyen de filtrage (18, 42) étant adapté pour éliminer par filtrage celle d'entre les porteuses dans la bande de fréquences du quatrième signal reçu par le moyen de réception (17) ; et
le moyen d'annulation d'écho (43) étant adapté pour calculer, en utilisant les coefficients établis, un signal d'écho du troisième signal ;
dans lequel ledit dispositif (2) de modem DSL comprend en plus un moyen de soustraction (44) pour soustraire le signal d'écho calculé par le moyen d'annulation d'écho (43) du quatrième signal filtré par le premier moyen de filtrage (18, 42).

3. Dispositif (2) de modem DSL selon l'une des revendications 1 ou 2, **caractérisé en ce qu'**un signal PILOT que l'autre dispositif de modem DSL émet vers le dispositif (2) de modem DSL pendant la séquence d'initialisation est celle d'entre les porteuses dans la bande de fréquences.

4. Procédé de commande de communication à réaliser par un dispositif (2) de modem DSL relié à un autre dispositif de modem DSL par une ligne, le dispositif (2) de modem DSL émettant, vers l'autre dispositif de modem DSL, des signaux sur des porteuses dans une bande de fréquences, ledit procédé comprenant:
la réception d'un premier signal en provenance de la ligne pendant une séquence d'initialisation ;
l'élimination d'une des porteuses dans la bande de fréquences du premier signal reçu sur une voie de réception ;
le choix de coefficients pour calculer une estimation du premier signal filtré à partir d'un deuxième signal qui est sur les porteuses dans la bande de fréquences dans une voie de transmission,
**caractérisé par**
l'élimination par filtrage de celle d'entre les porteuses dans la bande de fréquences du deuxième signal; et
l'émission du deuxième signal filtré vers l'autre dispositif de modem DSL.

5. Procédé de commande de communication selon la revendication 4, **caractérisé en ce qu'**il comprend en plus:
l'élimination par filtrage de celle d'entre les porteuses dans la bande de fréquences d'un troisième signal, dans une voie de transmission, sur les porteuses dans la bande de fréquences pendant une communication de données ;
l'émission du troisième signal filtré vers l'autre dispositif de modem DSL ;
la réception d'un quatrième signal en provenance de la ligne pendant la communication de données ;
l'élimination par filtrage de celle d'entre les porteuses dans la bande de fréquences du quatrième signal reçu ;
l'annulation, en utilisant les coefficients établis, d'un signal d'écho du troisième signal ; et
la soustraction du signal d'écho calculé du quatrième signal filtré.

6. Procédé de commande de communication selon l'une des revendications 4 ou 5, **caractérisé en ce qu'**un signal PILOT que l'autre dispositif de modem DSL émet vers le dispositif (2) de modem DSL pendant l'initialisation est celle d'entre les porteuses dans la bande de fréquences.
